**Europäisches Patentamt**

(19) **European Patent Office**

**Office européen des brevets**

(11) Veröffentlichungsnummer : **0 160 171**
**B1**

(12) **EUROPÄISCHE PATENTSCHRIFT**

(45) Veröffentlichungstag der Patentschrift : 01.02.89

(51) Int. Cl.⁴ : **C 01 G 45/00**

(21) Anmeldenummer : 85101967.9

(22) Anmeldetag : 22.02.85

(54) **Verfahren zur Herstellung von ammonsalzhaltigen Mangan(II)-Salzlösungen.**

(30) Priorität : 05.03.84 DE 3408031

(43) Veröffentlichungstag der Anmeldung :
06.11.85 Patentblatt 85/45

(45) Bekanntmachung des Hinweises auf die Patenterteilung : 01.02.89 Patentblatt 89/05

(84) Benannte Vertragsstaaten :
BE DE FR GB

(56) Entgegenhaltungen :
US--A-- 1 889 021
US--A-- 1 947 457
US--A-- 2 070 497

(73) Patentinhaber : **HOECHST AKTIENGESELLSCHAFT**
**Postfach 80 03 20**
**D-6230 Frankfurt am Main 80 (DE)**

(72) Erfinder : **Lehr, Klaus, Dr.**
**Am grünen Weg 10**
**D-5030 Hürth (DE)**
Erfinder : **Hofmann, Bernhard, Dr.**
**Schaesbergstrasse 3**
**D-5030 Hürth (DE)**
Erfinder : **Heymer, Gero, Dr.**
**Fasanenaue 12**
**D-5042 Erftstadt (DE)**

**Beschreibung**

Die vorliegende Erfindung betrifft ein Verfahren zur Herstellung von ammonsalzhaltigen Mangan(II)-Salzlösungen durch Laugung von manganhaltigen Verbindungen mit Ammonsalz-Lösungen.

Der Bedarf an reinen Mangansalzen als Zwischenprodukt für die Herstellung von γ-Braunstein, der als Rohstoff für die Batterieproduktion dient, steigt ständig.

Die elektrolytische Abscheidung von γ-Braunstein erfolgt aus sauren Mangan(II)-Salzlösungen. Nachteilig hierbei sind die hohen Investitionskosten und der teure Elektrolysestrom. Eine kostengünstigere Art der γ-Braunstein-Herstellung ist die oxidierende Röstung von Mangan-Karbonat. Mangan-Karbonat kann aus Mangan(II)-Salzlösungen mit Kohlendioxid und Ammoniak ausgefällt werden.

Die Laugung von reduziertem Manganerz mit Ammonium-Sulfat-Lösungen zur Gewinnung einer Mangan(II)-Salzlösung ist in der US-A-1,889,021 vorbeschrieben. Die Erzlaugung erfolgt beim Siedepunkt der Reaktionsmischung, wobei das abgetriebene Ammoniak in einer nachgeschalteten Reaktionsstufe unter Verwendung von Kohlendioxid zur Ausfällung von Mangan-Karbonat aus der Mangan(II)-Salzlösung eingesetzt wird. Die nach der Abtrennung des Mangan-Karbonats anfallende Ammonium-Sulfat-Lösung wird in die Laugungsstufe rückgeführt.

Nachteilig jedoch ist, daß nach dem Aufschluß eine Lösung mit 60-120 g/l Diammonium-Sulfat und lediglich 20 g/l $MnSO_4$ ( $\hat{=}$ 7,3 g/l Mn) erhalten wird. Dies bedeutet einen relativ hohen Umlauf an Diammonium-Sulfat-Lösung für die gelöste Manganmenge. Diese Methode ist somit unwirtschaftlich.

Die US-A-1,947,457 beschreibt ein Laugungsverfahren zur Gewinnung von Mangan(II)-Salzlösungen aus reduziertem Manganerz, bei dem die Laugung des Manganerzes bei erhöhter oder Siedetemperatur erfolgt und das Ammoniak während des Laugungsprozesses zusätzlich mittels sauerstoffhaltiger Gase ausgetrieben wird. Durch die sauerstoffhaltigen Gase werden gleichzeitig anwesende Eisenverbindungen oxidiert und ausgefällt.

Zur Erleichterung der $NH_3$-Austreibung wird ein spezieller Reaktor gewählt, der bei großer Oberfläche der Laugungsmaische nur eine geringe Füllhöhe des Reaktors aufweist. Die Ausbeute beim Laugungsprozeß beträgt 80 % bei einer Reaktionstemperatur von 100 °F ( $\triangle$ 38 °C) und einer Füllhöhe des Reaktors von 12 in ( $\triangle$ 30 cm), bzw. 85 % Ausbeute bei 85 °F ( $\triangle$ 29 °C) und einer Füllhöhe des Reaktors von 0,5 in ( $\triangle$ 1,25 cm), — jeweils unter Durchblasen von Luft zur Verringerung der $NH_3$-Konzentration in der Laugungsmaische. Die zur Laugung eingesetzte Ammonsalz-Lösung enthält 10 % Diammonium-Sulfat ( $\triangle$ 0,76 Mol/l). Es werden 10 Teile Diammonium-Sulfat pro 1 Teil Mangan(II)-Oxid im Erz zur Laugung eingesetzt. Somit ist sowohl die Verfahrenstechnik des Aufschlußreaktors, als auch der niedrige Quotient

$$\frac{\text{Mn (gelöst)}}{\text{Diammonium-Sulfat (eingesetzt)}}$$

dieses sogenannten Bradley-Fitch-Verfahrens wirtschaftlich ungünstig, da große Mengen an Ammonsalz-Lösungen umgewälzt werden müssen. Weiterhin ungünstig wirkt sich der hohe Inertgas-(Luft)-anteil im abgetriebenen $NH_3$-Gas aus für den Fall, daß man das $NH_3$ etwa zu $(NH_4)_2CO_3$ weiterverarbeiten will, um beispielsweise aus der bei der Erzlaugung gewonnenen Mangan(II)-Salzlösung Mangan-Karbonat auszufällen.

Die US-A-1,951,341 beschreibt die Manganerzlaugung mit Ammon-Salzlösung bei 100 °C. Unter hohem Energieeinsatz wird $NH_3$ mittels Dampf aus der Laugungsmaische ausgeblasen. Die Mangan-Ausbeute, bezogen auf eingesetztes Erz, ist nicht angegeben, jedoch wird darauf hingewiesen, daß unter diesen Bedingungen die Laugung in zwei aufeinander folgenden Schritten erfolgen muß. Außerdem beträgt der Einsatz pro 1 kg Erz (193 g Mn) 10 kg 10 gewichtsprozentige Ammon-Sulfatlösung. Somit ist auch bei dieser Arbeitsweise der Quotient

$$\frac{\text{Mn (gelöst)}}{\text{Diammonium-Sulfat (eingesetzt)}}$$

klein und die resultierende Mangan(II)-Salzlösung enthält nur 20 g/l Mangan.

Aus einer Beschreibung des Bradley-Fitch-Verfahrens im Pilotmaßstab (E.S. Leaver, Bureau of Mines Information Circular 6770 (1934), S. 167-192) geht hervor, daß bei Einsatz von Erzen mit 17 % Mn im ersten Laugungsschritt mit 60 prozentiger Ausbeute eine Mangan(II)-Salzlösung mit 4 % $MnSO_4$ 14,6 g/l Mangan erhalten wurde, die im zweiten Laugungsschritt (Gegenstrom) auf eine Konzentration von 6 % $MnSO_4$ 21,8 g/l Mangan gebracht wurde. Aus dieser Lösung wurde das Mangan ausgefällt ; dies jedoch nur mit 50 % Ausbeute, der Rest verblieb in der Ammonsalz-Lösung, welche für den Erzaufschluß rückgeführt wurde. Hierdurch wurde das Lösegleichgewicht zu Ungunsten der Manganerz-Laugung verändert. Weiterhin war der hohe Gangartanteil des verwendeten Erzes von Nachteil, wodurch entweder große Waschwassermengen erforderlich wurden, die eingedampft werden mußten, oder aber über die Filterkuchenfeuchte große Verluste an Mangan(II)-Salz und Ammonsulfat auftraten. Das Verfahren arbeitete somit unwirtschaftlich.

Schließlich wurde bei keinem der oben erwähnten Verfahren auch eine Sulfidfällung der durch Ammonsulfatlösung bevorzugt gelösten Schwermetalle Cu, Co, Ni usw. angewendet.

Die vorliegende Erfindung hat sich nunmehr die Aufgabe gestellt, ein Verfahren zur Herstellung von reinen ammonsalzhaltigen Mangan(II)-Salzlösungen aus manganhaltigen Stoffen mit Ammonsalz-Lösungen anzugeben, das mit hohen Auslauge-Ausbeuten und guter Filtrierbarkeit betrieben werden kann, und wobei die Mangan(II)-Salzlösungen nur geringe Magnesium-Verunreinigungen enthalten. Die Erfindung will insbesondere die bei einer Mangan-Karbonat-Fällstufe anfallende Mutterlauge, enthaltend gelöstes Diammonium-Sulfat, zur Laugung von reduziertem Manganerz nutzen.

Im einzelnen betrifft die Erfindung ein Verfahren zur Herstellung von ammonsalzhaltigen Mangan(II)-Salzlösungen durch Laugung von manganhaltigen Verbindungen mit Ammonsalz-Lösungen, das dadurch gekennzeichnet ist, daß durch Anlegen eines Unterdruckes in der Laugungsmaische eine Siedetemperatur von 57 bis 68 °C eingestellt wird. Besonders gute Ergebnisse liefert das Verfahren, wenn durch Anlegen eines Unterdruckes in der Laugungsmaische eine Siedetemperatur von 59 bis 62 °C eingestellt wird. Das erfindungsgemäße Verfahren eignet sich gleichermaßen, wenn die zur Laugung eingesetzte Ammonsalz-Lösung 0,5-2,5 Mol/l, insbesondere 0,9-1,1 Mol/l Diammonium-Sulfat, oder 1,0-5,0 Mol/l, insbesondere 1,8-2,2 Mol/l Ammonium-Nitrat enthält, oder wenn die zur Laugung eingesetzte Ammonsalz-Lösung aus einer Mangan-Karbonat-Fällstufe stammt und bevorzugt 0,7-1,5 Mol/l Diammonium-Sulfat oder 1,4-3,0 Mol/l Ammonium-Nitrat enthält.

Als manganhaltige Verbindungen können gemäß der Erfindung reduzierte hochprozentige Manganerze mit mehr als 55 % Mangan(II)-Oxid eingesetzt werden. Vorteilhaft werden die während der Laugung gelösten, z. B. in dem Manganerz enthaltenen Schwermetalle nach Beendigung des Laugungsvorganges als Sulfide gefällt.

Das Verfahren kann auch mit Ammonium-Chlorid-Lösungen betrieben werden ; allerdings kommt es bei der technischen Durchführung zu Korrosionsproblemen an Stahlteilen.

Die Vorteile der erfindungsgemäß ausgewählten Arbeitsweise liegen darin, daß bei einer Laugungstemperatur von 57-68 °C, insbesondere bei einer Laugungstemperatur von 59-62 °C, und einer Laugungszeit von 3 Stunden Ausbeuten von mehr als 90 %, berechnet auf den Mangan(II)-Gehalt im reduzierten Erz, erzielt werden. Die Maische ist gut filtrierbar, da die im Erz vorhandene Gangart körnig bleibt und so als Filterhilfsmittel wirkt. Bei Temperaturen unterhalb von 57 °C steigt die Viskosität der ammonsalzhaltigen Mangan(II)-Salzlösungen und erschwert so die Filtration ; bei Temperaturen oberhalb von 68 °C werden schleimige Anteile ausgeschieden, die eine gute Filtration äußerst erschweren.

Ein weiterer Vorteil liegt darin, daß bei Laugungstemperaturen von 57-68 °C nur geringe Magnesiumverunreinigungen in der Mangan(II)-Salzlösung enthalten sind. Magnesium-Verbindungen sind aus Mangan(II)-Salzlösung nicht abtrennbar und gelangen bei Weiterverarbeitung der Mangan(II)-Salzlösung zu Mangan-Karbonat in das Produkt.

Bei Einhaltung der erfindungsgemäßen Parameter wird in der benutzten Vorrichtung eine ammonsalzhaltige Mangan-Sulfat-Lösung nach Abtrennung der Feststoffe mit folgender Spezifikation erhalten :

| | |
|---|---|
| $(NH_4)_2SO_4$ = 0,1-2,1 Mol/l | (0,2-0,5 Mol/l) |
| $MnSO_4$ = 0,4-2,4 Mol/l | (0,7-1,0 Mol/l) |
| | |
| Ca < 300 mg/l | (< 220 mg/l) |
| Mg < 300 mg/l | (< 220 mg/l) |
| Na < 200 mg/l | (< 20 mg/l) |
| K < 200 mg/l | (< 30 mg/l) |
| Fe < 1,0 mg/l | (< 0,5 mg/l) |
| Cu < 0,1 mg/l | (< 0,1 mg/l) |
| Co < 1,0 mg/l | (< 0,5 mg/l) |
| Ni < 0,5 mg/l | (< 0,3 mg/l) |

In () sind vorzugsweise Werte angegeben, die erzielt werden, wenn unter vorteilhaften Laugungsbedingungen gearbeitet wird.

Bei der Erzlaugung mit Ammonium-Nitrat-Lösung ist die Verunreinigung mit Calcium-Salzen wesentlich höher. Durch einen Sulfatzusatz kann jedoch die Calcium-Verunreinigung in der Mangan-Salzlösung gesenkt werden.

Die nachfolgenden Beispiele erläutern das erfindungsgemäße Verfahren.

Beispiele 1-20

Je 592 g reduziertes Imini-Erz wurden mit je 10 l 1 molarer Diammonium-Sulfat-Lösung bei Temperaturen zwischen 40-100 °C und einer Reaktionszeit von 1-5 Stunden in einem Rührbehälter mit Doppelmantel aufgeschlossen. Das zuvor mit Wasserstoff bei erhöhter Temperatur reduzierte Imini-Erz hatte folgende Zusammensetzung :

EP 0 160 171 B1

78,5 Gewichts% MnO
7,1 Gewichts% SiO$_2$
1,2 Gewichts% MnO$_2$
0,7 Gewichts% Fe$_2$O$_3$

Durch Anlegen von Unterdruck mittels einer Strahlpumpe wurde die Laugungsmaische im Siedezustand gehalten und das mit Wasserdampf gesättigte Ammoniak abgetrieben. Die Verdampfungswärme wurde mittels eines Warmwasserkreislaufs dem Rührbehälter über den Doppelmantel zugeführt.

Dem Rührbehälter wurden stündlich Proben entnommen, in denen die gelöste Manganmenge analytisch ermittelt wurde. Nach Beendigung des Laugungsvorganges wurden durch Einleitung von Schwefelwasserstoffgas die Schwermetalle ausgefällt, der Ansatz filtriert und die analytische Zusammensetzung der Mangan-Salzlösung ermittelt.

Die Mangan(II)-Salzlösung enthielt im Beispiel 9 32,7 g/l Mangan.

Die Ergebnisse sind in den Tabellen 1 und 2 zusammengefaßt :

Tabelle 1

Abhängigkeit der Ausbeute von der Laugungstemperatur und Laugungszeit

| Beispiel Nr. | Reaktions- zeit (h) | Reaktions- temperatur (°C) | Ausbeute % Mn gelöst |
|---|---|---|---|
| 1 | 1 | 40 | 43,2 |
| 2 | 3 | 40 | 49,5 |
| 3 | 5 | 40 | 52,2 |
| 4 | 1 | 50 | 51,1 |
| 5 | 3 | 50 | 63,6 |
| 6 | 5 | 50 | 71,9 |
| 7 | 1 | 60 | 58,5 |
| 8 | 3 | 60 | 78,0 |
| 9 | 5 | 60 | 90,9 |
| 10 | 7 | 60 | 91,9 |
| 11 | 10 | 60 | 92,7 |
| 12 | 1 | 70 | 54,3 |
| 13 | 3 | 70 | 72,6 |
| 14 | 5 | 70 | 83,5 |
| 15 | 1 | 80 | 50,1 |
| 16 | | 80 | 67,6 |
| 17 | | 80 | 76,0 |
| 18 | 1 | 95 | 44,4 |
| 19 | 3 | 95 | 59,2 |
| 20 | 5 | 95 | 65,7 |

4

Tabelle 2

Analytische Zusammensetzung der filtrierten Mangan-Salzlösung

| Beispiel Nr. | Verunreinigung in $\lceil mg/l\rfloor$ | | | | | | | |
|---|---|---|---|---|---|---|---|---|
| | Mg | Ca | Na | K | Fe | Cu | Co | Ni |
| 3 | 180 | 200 | 12 | 26 | 0,6 | < 0,1 | 0,5 | 0,2 |
| 6 | 190 | 210 | 11 | 27 | 0,5 | < 0,1 | 0,5 | 0,2 |
| 9 | 200 | 220 | 11 | 26 | 0,6 | < 0,1 | 0,5 | 0,2 |
| 14 | 220 | 240 | 11 | 23 | 0,6 | < 0,1 | 0,6 | 0,2 |
| 17 | 235 | 250 | 10 | 24 | 0,5 | < 0,1 | 0,6 | 0,2 |
| 20 | 265 | 290 | 10 | 19 | 0,6 | < 0,1 | 0,6 | 0,2 |

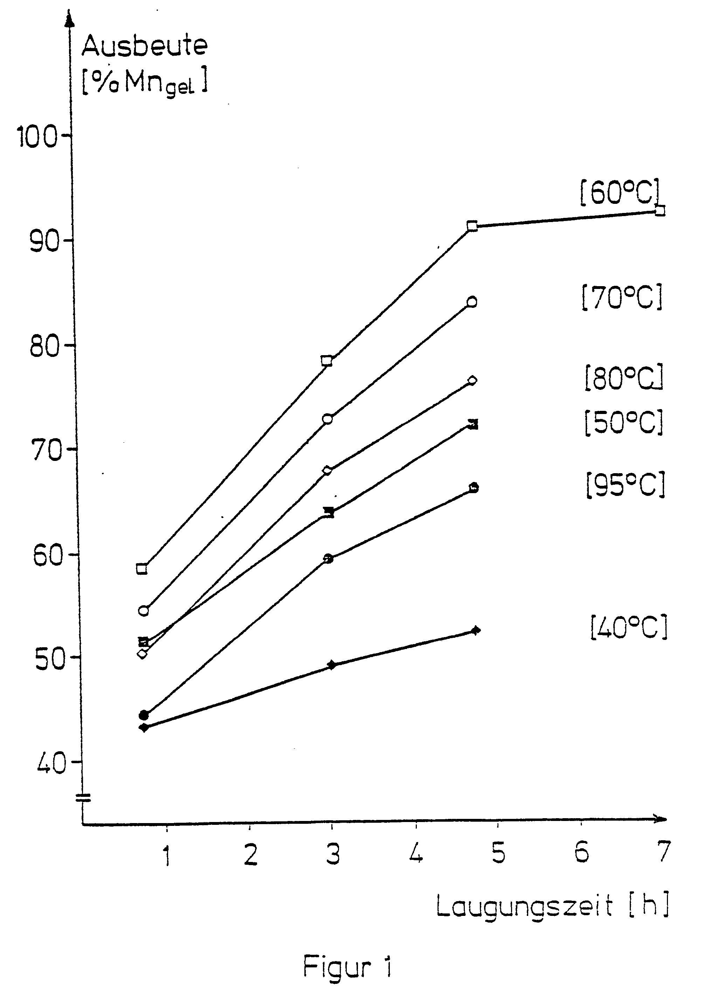

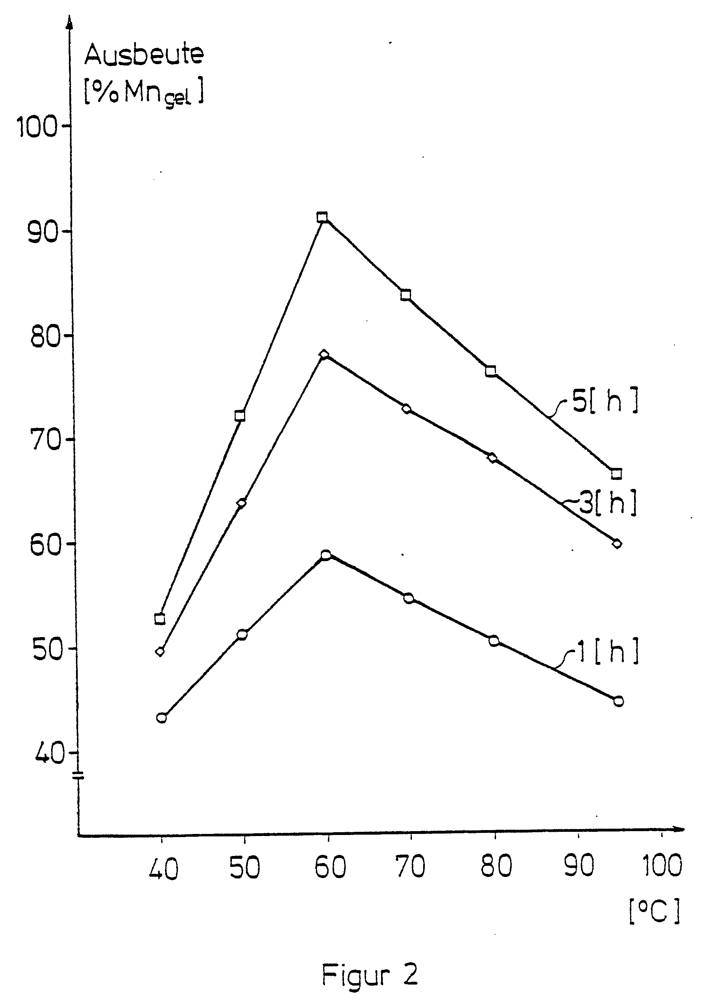

Schließlich sind die Figuren 1 und 2 beigefügt. In der Figur 1 ist die Ausbeute an gelöstem Mangan gegen die Laugungszeit aufgetragen ; in der Figur 2 ist die Ausbeute an gelöstem Mangan gegen die Laugungstemperatur aufgetragen.

Beispiel 21

592 g reduziertes Imini-Erz wurden mit 10 l Ammonsalz-Lösung bei 60 °C 5 Stunden lang im Rührbehälter bei einem Druck von 0,2 bar am Sieden gehalten.

Die Ammonsalz-Lösung stammt aus einer Mangan-Karbonat-Fällstufe und enthielt 1,08 Mol/l Diammonium-Sulfat bei einem pH-Wert von 8,0.

Nach 5 Stunden Laugungszeit wurden die gelösten Schwermetalle durch Einleiten von Schwefelwasserstoff bei einer Temperatur von 60 °C ausgefällt und die Feststoffe abfiltriert. Die Ausbeute an gelöstem Mangan betrug 91,8 %.

Aus dieser Mangansalz-Lösung wurde durch eine ammoniakalische, ammonsalzhaltige Diammonium-Karbonat-Lösung das Mangan als Mangan-Karbonat bei 60 °C und einem pH-Wert von 8,0 gefällt. Das bei der Mangan-Karbonat-Fällung erhaltene Filtrat wurde zur Erzlaugung wiederverwendet. 592 g reduziertes Imini-Erz wurden mit 10 l dieser abfiltrierten Ammonsalz-Lösung, enthaltend 1,1 Mol/l Diammonium-Sulfat, gelaugt. Die Ausbeute an gelöstem Mangan betrug 92,0 %. Die Verunreinigung an Magnesium wurde mit 200 mg/l ermittelt.

Abschließend sei vermerkt, daß unter dem in Ansprüchen, Beschreibung und Beispielen gebrauchten Begriff Lösung im Sinne der vorliegenden Erfindung jeweils wässerige Lösungen zu verstehen sind.

**Patentansprüche**

1. Verfahren zur Herstellung von ammonsalzhaltigen Mangan(II)-Salzlösungen durch Laugung von manganhaltigen Verbindungen mit Ammonsalz-Lösungen, dadurch gekennzeichnet, daß durch Anlegen eines Unterdruckes in der Laugungsmaische eine Siedetemperatur von 57-68 °C eingestellt wird.

2. Verfahren nach Anspruch 1, dadurch gekennzeichnet, daß durch Anlegen eines Unterdruckes in der Laugungsmaische eine Siedetemperatur von 59 bis 62 °C eingestellt wird.

3. Verfahren nach einem der Ansprüche 1 oder 2, dadurch gekennzeichnet, daß die zur Laugung eingesetzte Ammonsalz-Lösung 0,5-2,5 Mol/l Diammonium-Sulfat oder 1,0-5,0 Mol/l Ammonium-Nitrat enthält.

4. Verfahren nach Anspruch 3, dadurch gekennzeichnet, daß die zur Laugung eingesetzte Ammonsalz-Lösung 0,9-1,1 Mol/l Diammonium-Sulfat oder 1,8-2,2 Mol/l Ammonium-Nitrat enthält.

5. Verfahren nach einem der Ansprüche 1 oder 2, dadurch gekennzeichnet, daß die zur Laugung eingesetzte Ammonsalz-Lösung aus einer Mangan-Karbonat-Fällstufe stammt und bevorzugt 0,7-1,5 Mol/l Diammonium-Sulfat oder 1,4-3,0 Mol/l Ammonium-Nitrat enthält.

6. Verfahren nach einem der vorhergehenden Ansprüche, dadurch gekennzeichnet, daß als manganhaltige Verbindungen reduzierte hochprozentige Manganerze mit mehr als 55 Gewichts% Mangan(II)-Oxid eingesetzt werden.

7. Verfahren nach einem der vorhergehenden Ansprüche, dadurch gekennzeichnet, daß während der Laugung gelöste Schwermetalle nach Beendigung des Laugungsvorganges als Sulfide gefällt werden.

## Claims

1. A process for the preparation of manganese(II) salt solutions containing ammonium salts by leaching manganese-containing compounds with ammonium salt solutions, which comprises establishing a boiling point of 57-68 °C in the leaching mash by applying a reduced pressure.

2. The process as claimed in claim 1, wherein a boiling point of 59 to 62 °C is established in the leaching mash by applying a reduced pressure.

3. The process as claimed in one of the claims 1 or 2, wherein the ammonium solution used for leaching contains 0.5-2.5 mol/l of diammonium sulfate or 1.0-5.0 mol/l of ammonium nitrate.

4. The process as claimed in claim 3, wherein the ammonium salt solution used for leaching contains 0.9-1.1 mol/l of diammonium sulfate or 1.8-2.2 mol/l of ammonium nitrate.

5. The process as claimed in one of the claims 1 or 2, wherein the ammonium salt solution used for leaching originates from a manganese carbonate precipitation stage and preferably contains 0.7-1.5 mol/l of diammonium sulfate or 1.4-3.0 mol/l of ammonium nitrate.

6. The process as claimed in one of the preceding claims, wherein reduced high-percentage manganese ores containing more than 55 % by weight of manganese(II) oxide are used as manganese-containing compounds.

7. The process as claimed in one of the preceding claims, wherein, during the leaching, dissolved heavy metals are precipitated as sulfides after completing the leaching process.

## Revendications

1. Procédé pour la fabrication de solutions de sels de manganèse(II) contenant des sels d'ammonium par lixiviation de composés contenant du manganèse par des solutions de sels d'ammonium, caractérisé en ce que l'on ajuste une température d'ébullition de 57-68 °C dans la bouillie de lixiviation par application d'une pression réduite.

2. Procédé selon la revendication 1, caractérisé en ce que l'on ajuste une température d'ébullition de 59 à 62 °C dans la bouillie de lixiviation par application d'une pression réduite.

3. Procédé selon la revendication 1 ou 2, caractérisé en ce que la solution de sel d'ammonium utilisée pour la lixiviation contient 0,5-2,5 mol/l de sulfate diammonique ou 1,0-5,0 mol/l de nitrate d'ammonium.

4. Procédé selon la revendication 3, caractérisé en ce que la solution de sel d'ammonium utilisée pour la lixiviation contient 0,9-1,1 mol/l de sulfate diammonique ou 1,8-2,2 mol/l de nitrate d'ammonium.

5. Procédé selon la revendication 1 ou 2, caractérisé en ce que la solution de sel d'ammonium utilisée pour la lixiviation provient d'une étape de précipitation du carbonate de manganèse et contient de préférence 0,7-1,5 mol/l de sulfate diammonique ou 1,4-3,0 mol/l de nitrate d'ammonium.

6. Procédé selon l'une des revendications précédentes, caractérisé en ce que l'on utilise comme composés contenant du manganèse des minerais de manganèse réduits à pourcentage élevé à plus de 55 % en poids d'oxyde de manganèse(II).

7. Procédé selon l'une des revendications précédentes, caractérisé en ce que les métaux lourds dissous pendant la lixiviation sont précipités après la fin du processus de lixiviation sous la forme de sulfures.

Figur 1

Figur 2